# FASCICULE DE BREVET EUROPEEN

(11) **EP 3 754 225 B1**
(45) Date de publication et mention de la délivrance du brevet: **06.09.2023**
(21) Numéro de dépôt: 20180434.1
(22) Date de dépôt: 17.06.2020
(51) Int. Cl.: F16H 25/20, H02K 7/06, G01L 5/00, H02K 7/08, F16H 25/22

(54) **VÉRIN ÉLECTROMÉCANIQUE À CAPTEUR D'EFFORT INTÉGRÉ**
ELEKTROMECHANISCHES STELLGLIED MIT INTEGRIERTEM KRAFTSENSOR
ELECTROMECHANICAL ACTUATOR WITH INTEGRATED FORCE SENSOR

(30) Priorité: 18.06.2019 FR 1906528
(43) Date de publication de la demande: 23.12.2020
(73) Titulaire: Ewellix AB, 433 21 Partille, Göteborg (SE)
(72) Inventeur: Benoit, Laurent, 73800 La Chavanne (FR)
(74) Mandataire: Heyerhoff Geiger & Partner Patentanwälte PartGmbB

(56) Documents cités:
- EP-A1- 2 258 509
- EP-A1- 3 754 225
- EP-B1- 2 258 509
- WO-A1-2007/100338
- US-A1- 2005 253 469
- US-A1- 2007 295 110

## Description

La présente invention concerne le domaine des actionneurs ou vérins électromécaniques.

Plus particulièrement, l'invention concerne le domaine des vérins électromécaniques équipés d'un ou de plusieurs capteurs d'effort.

Un vérin électromécanique comprend généralement un carter, une tige d'actionnement montée mobile longitudinalement par rapport au carter, un moteur électrique et un mécanisme, par exemple du type vis à billes ou à rouleaux, pour transformer le mouvement de rotation du rotor du moteur en mouvement de translation linéaire de la tige d'actionnement.

Pour guider en rotation et supporter le rotor du moteur électrique, il est généralement monté à l'avant ou à l'arrière du carter une paire de paliers à roulement montés axialement en appui l'un contre l'autre.

Pour intégrer un capteur d'effort à un vérin électromécanique, une solution consiste à monter ce capteur contre la bague extérieure de l'un de ces deux paliers à roulement pour pouvoir mesurer la déformation dans le sens axial de cette bague lors des mouvements de la tige d'actionnement du vérin.

Toutefois, avec ce montage, afin de mesurer des déformations dans les deux directions axiales, le capteur d'effort doit être soumis à une précharge axiale qui est appliquée aux paliers à roulement lors de l'assemblage. Dès lors, la sensibilité du capteur d'effort sera différente en fonction des mouvements où la tige d'actionnement pousse une charge et travaille en compression, et des mouvements où la tige tire une charge et travaille en traction, et sera aussi différente en fonction de la fixation du vérin électromécanique avec son environnement extérieur.

Pour intégrer un capteur d'effort à un vérin électromécanique, une autre solution consiste à monter le capteur d'effort sur une partie d'extrémité avant de la tige d'actionnement. Pour plus de détails sur cette solution, on pourra par exemple se référer à la demande de brevet EP-A1-1 587 205 (Transrol).

US 2007/0295110 A1, décrit un vérin électromécanique comprenant un capteur d'efforts pour surveiller la force axiale sur l'actionneur linéaire. Le capteur d'efforts peut faire partie d'un ensemble de palier positionné entre un palier de rotation et un logement de palier.

Lors des opérations d'assemblage du vérin électromécanique, la tige d'actionnement est entraînée en rotation, ce qui peut également provoquer la rotation du câble de connexion électrique reliant le capteur d'effort à la carte électronique de traitement des signaux émis. Ceci peut entraîner une détérioration de ce câble.

En outre, lors du fonctionnement du vérin, le câble de connexion électrique se déplace constamment lors des mouvements de la tige d'actionnement. Ceci peut aussi favoriser une détérioration du câble de connexion électrique.

La présente invention vise à améliorer l'assemblage d'un vérin électromécanique tout en offrant une fiabilité accrue pour une mesure de force.

L'invention a pour objet un vérin électromécanique selon la revendication 1 comprenant un carter, une tige d'actionnement montée mobile longitudinalement par rapport au carter, un moteur électrique pourvu d'un arbre de rotor rotatif, un mécanisme de transformation d'un mouvement de rotation de l'arbre de rotor du moteur électrique en un mouvement de translation linéaire de la tige d'actionnement, et au moins un palier pour guider en rotation l'arbre de rotor du moteur électrique par rapport au carter et pour supporter l'arbre de rotor.

Selon une caractéristique générale, le vérin électromécanique comprend en outre un fourreau fixé au carter et à l'intérieur duquel est monté ledit palier.

Selon une autre caractéristique générale, le vérin électromécanique comprend également au moins un capteur d'effort monté sur le fourreau en étant décalé axialement par rapport audit palier.

Le montage du ou des capteurs sur un fourreau intermédiaire disposé radialement entre le carter et le ou les paliers, associé au positionnement axial de ce(s) capteur(s) décalé relativement au(x) palier(s) permet de s'affranchir des problématiques liées à la précharge axiale appliquée au(x) palier(s) et aux déformations qui peuvent exister lors de l'assemblage.

Le ou les capteurs d'effort sont montés sur une portion du fourreau qui est décalée axialement par rapport à la portion du fourreau sur laquelle sont montés le ou les paliers.

La précision des mesures obtenues est fortement améliorée. En outre, le ou les capteurs d'effort peuvent travailler axialement dans les deux directions en conservant la même sensibilité.

Par ailleurs, la fiabilité dans le temps du vérin est accrue dans la mesure où le ou les capteurs d'effort ne sont pas montés sur la tige d'actionnement coulissante de celui-ci.

Avantageusement, un jeu radial annulaire est prévu au moins entre l'alésage du carter et la portion du fourreau sur laquelle sont montés ledit palier et ledit capteur.

Ainsi, les déformations axiales du fourreau qui peuvent être mesurées par le ou les capteurs d'effort ne sont pas affectées par les frottements qui pourraient exister entre le carter et la zone du fourreau où sont disposés le ou les capteurs d'effort et le ou les paliers. Ceci accroît encore la précision des mesures obtenues.

Selon l invention, le fourreau comprend une portion tubulaire axiale à l'intérieur de laquelle est monté ledit palier et supportant ledit capteur d'effort, et une bride radiale pour la fixation dudit fourreau au carter.

Selon l invention, le carter comprend un corps principal tubulaire et des flasques avant et arrière montés chacun à une extrémité du corps principal, la tige d'actionnement s'étendant à travers le flasque avant et ledit palier étant situé axialement entre le moteur électrique et le flasque avant.

Selon l invention, la bride du fourreau est enserrée axialement entre le corps principal et le flasque avant du carter. Ceci permet d'obtenir une fixation rapide et facile du fourreau sur le carter. En outre, cela permet aussi de pouvoir obtenir un montage flottant de la portion tubulaire du fourreau.

Dans ce but, un jeu axial annulaire peut également être prévu entre l'alésage du carter et l'extrémité du fourreau située axialement à l'opposé de la bride.

Selon une conception particulière, des ouvertures traversantes sont ménagées dans l'épaisseur radiale du fourreau, ledit capteur d'effort étant disposé entre deux ouvertures successives dans le sens circonférentiel. Avec une telle conception, on favorise le caractère déformable du fourreau, et par conséquence une bonne précision des mesures obtenues par le ou les capteurs d'effort.

Dans un mode de réalisation, ledit capteur d'effort est monté sur la surface extérieure du fourreau. Alternativement, ledit capteur d'effort pourrait être monté dans l'alésage du fourreau.

Le vérin électromécanique peut également comprendre au moins un câble de connexion électrique qui est relié audit capteur d'effort et qui est monté sur le fourreau. Pour des raisons de compacité radiale, il est possible de prévoir que ledit câble de connexion électrique s'étend au moins en partie à l'intérieur d'au moins une gorge formée sur le fourreau.

Dans un mode de réalisation particulier, le vérin électromécanique peut comprendre en outre une carte électronique reliée audit câble de connexion électrique et qui est montée à l'intérieur d'un boitier externe fixé sur le carter.

Ledit palier à roulement peut comprendre une bague extérieure montée dans l'alésage du fourreau, une bague intérieure montée sur l'arbre de rotor du moteur électrique, et au moins une rangée d'éléments roulants disposés entre des chemins de roulement formés sur lesdites bagues.

De préférence, le vérin comprend au moins deux paliers à roulement montés axialement en contact l'un contre l'autre à l'intérieur du fourreau. Les rangées d'éléments roulants des paliers peuvent être disposées en O ou en X. Dans un mode de réalisation, le ou les paliers peuvent être du type à billes à contact oblique.

Selon une conception avantageuse, le mécanisme de transformation de mouvement comprend une vis solidaire de la tige d'actionnement et pourvue d'un filetage extérieur, et une pluralité de rouleaux longitudinaux en prise avec le filetage extérieur de la vis et avec un filetage intérieur de l'arbre de rotor. Le mécanisme est du type vis à rouleaux satellite inversée. Ceci favorise la compacité radiale globale du vérin électromécanique.

Alternativement, il est cependant possible de prévoir d'autres conceptions pour le mécanisme de transformation de mouvement. Celui-ci peut par exemple comprendre une vis pourvue d'un filetage extérieur, un écrou disposé autour de la vis, comprenant un filetage intérieur et solidaire de la tige d'actionnement, et une pluralité de rouleaux longitudinaux en prise avec les filetages extérieur et intérieur de la vis et de l'écrou. Le mécanisme est du type vis à rouleaux satellite.

Alternativement, en remplacement des rouleaux, des billes peuvent être engagées à l'intérieur des filetages extérieur et intérieur de la vis et de l'écrou.

Dans une autre variante de réalisation du mécanisme, il pourrait être possible de prévoir le filetage extérieur de la vis en prise directe avec le filetage intérieur de l'écrou.

La présente invention sera mieux comprise à l'étude de la description détaillée d'un mode de réalisation, pris à titre d'exemple nullement limitatif et illustré par les dessins annexés, sur lesquels :
[Fig 1] est une vue en coupe d'un vérin électromécanique selon un exemple de réalisation de l'invention,
[Fig 2] est une vue en coupe partielle du vérin électromécanique de la figure 1 selon un autre plan de coupe,
[Fig 3] est une vue de détail de la figure 2, et
[Fig 4] est une vue en perspective d'un fourreau du vérin électromécanique des figures 1 et 2.

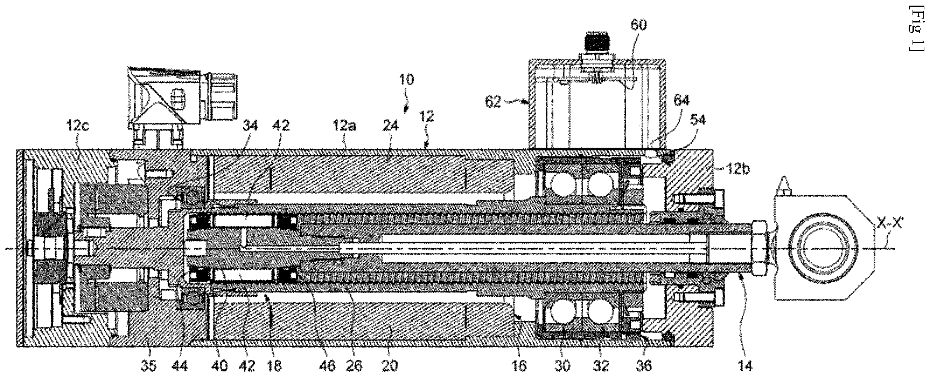

Sur la figure 1 un vérin électromécanique, désigné par la référence numérique générale 10, d'axe X-X' longitudinal, est représenté dans une position supposée horizontale.

Le vérin 10 comprend un carter 12, une tige 14 d'actionnement mobile axialement et coaxiale à l'axe X-X', un moteur 16 électrique et un mécanisme 18 de transformation d'un mouvement de rotation dudit moteur en mouvement translation linéaire de la tige 14 le long de l'axe X-X'. Le mécanisme 18 est interposé radialement entre le moteur 16 électrique et la tige d'actionnement 14.

Le moteur 16 électrique et le mécanisme 18 sont entièrement logés à l'intérieur du carter 12. La tige 14 d'actionnement s'étend axialement à travers le carter 12 et en saillie vers l'extérieur.

Le moteur 16 électrique comprend un stator 20 fixé sur le carter 12 et un rotor (non représenté). Le stator 20 est fixé dans l'alésage 24 du carter. Le rotor est pourvu d'un arbre 26 de rotor tubulaire et d'une pluralité d'aimants (non représentés) permanents supportés par ledit arbre. L'arbre 26 de rotor s'étend axialement de part et d'autre du stator 20. Le moteur 16 électrique peut être du type brushless.

Dans l'exemple de réalisation illustré, le carter 12 comprend un corps 12a principal tubulaire, et des flasques avant 12b et arrière 12c fixés chacun à une extrémité axiale dudit corps. La tige 14 d'actionnement s'étend à travers le flasque avant 12b et en saillie à l'extérieur du carter 12. Le corps 12a principal délimite la majeure partie de l'alésage 24 du carter.

Pour guider en rotation et supporter l'arbre 26 de rotor, le vérin 10 comprend encore deux paliers 30, 32 à roulement avant et un palier 34 à roulement arrière.

Le palier 34 à roulement arrière est interposé radialement entre l'arbre 26 de rotor et un support 35 arrière du carter interposé axialement entre le corps 12a et le flasque arrière 12c. Le palier 34 à roulement est monté sur la surface extérieure de l'arbre 26 de rotor du moteur électrique et dans un alésage du support 35 arrière.

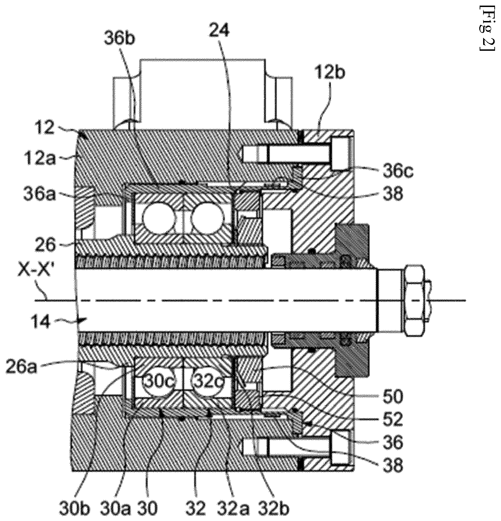

Comme cela sera décrit plus en détail par la suite, le vérin 10 comprend également un boitier formant fourreau 36 à l'intérieur duquel sont montés les paliers 30, 32 à roulement avant et qui supporte des capteurs 38 d'effort (figure 2) dudit vérin. Le fourreau 36 est fixé au carter 12. Le fourreau 36 est interposé radialement entre l'alésage 24 du carter et les paliers 30, 32.

Dans l'exemple de réalisation illustré, le mécanisme 18 est un mécanisme de vis à rouleaux du type vis à rouleaux satellites inversée. Le mécanisme 18 comprend une vis 40, qui est coaxiale à la tige 14 d'actionnement, fixée à ladite tige et pourvue d'un filetage extérieur (non référencé), et une pluralité de rouleaux 42 longitudinaux disposés radialement entre la vis et l'arbre 26 de rotor du moteur électrique. L'arbre 26 de rotor présente une forme tubulaire. L'arbre 26 de rotor, coaxial à la vis 40, comprend un filetage intérieur (non référencé) dont le diamètre intérieur est supérieur au diamètre extérieur du filetage de la vis 40.

Les rouleaux 42 sont identiques entre eux et répartis ici de manière régulière autour de la vis 40. Chaque rouleau 42 s'étend selon un axe parallèle à l'axe de la vis et comprend un filetage extérieur (non référencé) en prise avec le filetage extérieur de la vis 40 et avec le filetage intérieur de l'arbre 26 de rotor. De manière connue en soi, chaque rouleau 42 comprend, à chaque extrémité, une denture extérieure en prise avec une denture de synchronisation de la vis 40, et un tourillon s'étendant axialement vers l'extérieur à partir de la denture et logé dans un évidement d'une des bagues 44, 46 d'espacement montées sur ladite vis.

La tige 14 d'actionnement est solidaire de la vis 40 du mécanisme de vis à rouleaux. Une rotation de l'arbre 26 de rotor du moteur électrique est convertie en une translation de la vis 40 et de la tige 14 d'actionnement le long de l'axe X-X'.

Comme indiqué précédemment, les paliers 30, 32 supportent et assurent le guidage en rotation de l'arbre 26 de rotor du moteur électrique. Les paliers 30, 32 sont montés axialement en appui l'un contre l'autre.

Comme illustré plus visiblement à la figure 2, chaque palier 30, 32 comprend une bague extérieure 30a, 32a, une bague intérieure 30b, 32b et une pluralité d'éléments roulants 30c, 32c, ici réalisés sous la forme d'une rangée de billes, disposés radialement entre des chemins de roulement formés sur lesdites bagues. Chaque palier 30, 32 comprend également une cage (non représentée) de maintien de l'espacement circonférentiel régulier des éléments roulants.

La bague intérieure 30b, 32b de chaque palier est montée sur la surface extérieure de l'arbre 26 de rotor du moteur électrique. La bague extérieure 30a, 32a de chaque palier est montée à l'intérieur de l'alésage du fourreau 36.

La bague intérieure 30b du palier 30 est montée axialement en appui contre un épaulement 26a de l'arbre de rotor. La bague extérieure 30a de ce palier 30 est montée axialement en appui contre un rebord 36a radial annulaire du fourreau 36, ici par l'intermédiaire d'une rondelle (non référencée). Alternativement, il est possible de prévoir un contact direct entre le rebord 36a du fourreau et la bague extérieure 30a.

Pour précharger axialement l'empilement des paliers 30 et 32, le vérin 10 comprend deux écrous 50, 52 de blocage montés respectivement en appui contre les bagues intérieure 32b et extérieure 32a du palier 32, axialement du côté opposé à l'autre palier 30. Une rondelle (non référencée) est ici axialement interposée entre chaque écrou 50, 52 et le palier 32. Alternativement, il est possible de ne pas prévoir ces rondelles. L'écrou 50 est vissé sur la surface extérieure de l'arbre 26 de rotor du moteur électrique. L'écrou 52 est quant à lui vissé dans l'alésage du fourreau 36.

Comme indiqué précédemment, les paliers 30, 32 sont montés à l'intérieur du fourreau 36 qui supporte également les capteurs 38 d'effort. Le fourreau 36 est réalisé en une seule pièce. Le fourreau 36 peut par exemple être réalisé en matière métallique, notamment en acier.

Le fourreau 36 comprend une portion tubulaire 36b axiale délimitant l'alésage dudit fourreau à l'intérieur duquel sont montés les paliers 30, 32. A une extrémité axiale, la portion tubulaire 36b est prolongée radialement vers l'intérieur par le rebord 36a. A l'extrémité axiale opposée, la portion tubulaire 36b est prolongée radialement vers l'extérieur par une bride 36c radiale annulaire. La bride 36c est enserrée axialement entre le corps 12a et le flasque avant 12b du carter. La bride 36c assure la fixation du fourreau 36 au carter 12.

Les capteurs 38 d'effort sont montés sur la portion tubulaire 36b du fourreau. Les capteurs 38 d'effort sont montés sur la portion tubulaire 36b en étant décalés axialement par rapport aux paliers 30 et 32, ici du côté de la bride 36c. Les capteurs 38 ne sont pas situés radialement au droit de la zone de la portion tubulaire 36b à l'intérieur de laquelle sont montés les paliers 30, 32. Autrement dit, les capteurs 38 d'effort sont montés sur la portion tubulaire 36b dans une zone de celle-ci laissée libre par les paliers 30, 32.

Dans l'exemple de réalisation illustré, les capteurs 38 d'effort sont montés sur la surface extérieure de la portion tubulaire 36b. Alternativement, il pourrait être possible de prévoir un montage des capteurs 38 d'effort dans l'alésage de la portion tubulaire 36b. Les capteurs 38 sont ici au nombre de deux et diamétralement opposés. En variante, il est possible de prévoir un nombre différent de capteurs, par exemple un unique capteur ou au moins trois capteurs. Dans le cas d'une pluralité de capteurs, ceux-ci sont de préférence espacés de manière régulière les uns par rapport aux autres dans le sens circonférentiel.

Les capteurs 38 d'effort sont des jauges de déformation dont la résistance varie avec la force axiale appliquée sur le fourreau 36. Les capteurs 38 d'effort sont aptes à se déformer de sorte à pouvoir mesurer une compression ou un allongement axial de la portion tubulaire 36b du fourreau. Dans l'exemple de réalisation illustré, deux portions planes opposées sont formées sur la portion tubulaire 36b du fourreau pour le montage des capteurs 38 d'effort.

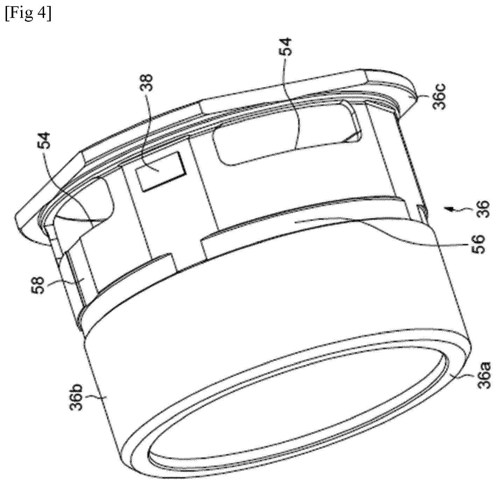

Comme cela est illustré plus visiblement à la figure 4, des ouvertures 54 traversantes sont ménagées dans l'épaisseur radiale de la portion tubulaire 36b du fourreau. Ces ouvertures 54 sont prévues pour favoriser les déformations de la portion tubulaire 36b du fourreau dans la zone des capteurs 38 d'effort. Chaque capteur 38 d'effort est disposé entre deux ouvertures 54 successives dans le sens circonférentiel. Les capteurs 38 d'effort et les ouvertures 54 sont situés dans un même plan radial. Les capteurs 38 d'effort et les ouvertures 54 sont ici disposés axialement à proximité de la bride 36c du fourreau.

Dans l'exemple de réalisation illustré, sur la portion tubulaire 36b du fourreau sont également prévues des gorges 56, 58 pour le montage de câbles de connexion électrique (non représentés) qui relient les capteurs 38 d'effort à une carte électronique 60 (figure 1) du vérin électronique pour le traitement des signaux émis. Les gorges 56, 58 sont formées sur la surface extérieure de la portion tubulaire 36b du fourreau. Dans l'exemple de réalisation illustré, la gorge 56 s'étend dans le sens circonférentiel et est de forme annulaire. La gorge 58 s'étend quant à elle axialement et débouche dans la gorge 56. Les câbles de connexion électrique peuvent être fixés à l'intérieur des gorges 56, 58 par tout moyen approprié, par exemple par collage. En variante, il pourrait être possible de ne pas prévoir de telles gorges.

En se référant de nouveau à la figure 1, la carte électronique 60 est fixée à l'intérieur d'un boitier 62 externe qui est lui-même fixé au carter 12. Un évidement 64 traversant est ménagé dans l'épaisseur du corps 12a du carter pour le passage des câbles de connexion électrique.

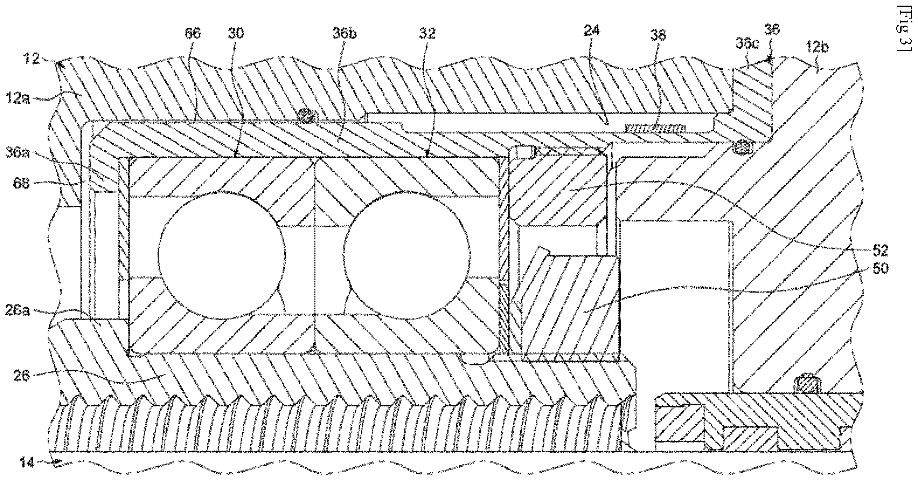

En se référant à la figure 3, un jeu radial 66 annulaire est prévu entre l'alésage 24 du carter et la portion tubulaire 36b du fourreau. Il n'existe aucun contact direct dans le sens radial entre la portion tubulaire 36b du fourreau et l'alésage 24 du carter dans les zones de montage des paliers 30, 32 et des capteurs 38 d'effort. Le jeu radial 66 annulaire est prévu ici le long de la totalité de la portion tubulaire 36b du fourreau. Un jeu axial 68 est également prévu entre l'alésage 24 du carter et le rebord 36c du fourreau.

La portion tubulaire 36b du fourreau est montée flottante par rapport au carter 12. Aucun contact direct n'est prévu ici dans le sens axial et dans le sens radial entre la portion tubulaire 36b du fourreau et l'alésage 24 du carter.

En fonctionnement, lors des mouvements où la tige 14 du vérin pousse une charge et travaille en compression, l'effort est repris par le palier 32 puis par le palier 30 en appui contre le rebord 36a du fourreau, ce qui provoque un allongement de la portion tubulaire 36b dudit fourreau, notamment dans la zone des capteurs 38 d'effort qui mesurent cet allongement.

A l'inverse, lors des mouvements où la tige 14 du vérin tire une charge et travaille en traction, l'effort est repris par le palier 30 puis par le palier 32 en appui contre l'écrou 52, ce qui provoque une compression de la portion tubulaire 36b du fourreau qui est mesurée par les capteurs 38 d'effort.

Grâce à la prévision du fourreau 36 intermédiaire sur lequel sont montés les capteurs 38 d'effort et au positionnement de ces capteurs relativement aux paliers 30 et 32, la précision des mesures obtenues est améliorée, et ce, avec une même sensibilité quel que soit le sens de l'effort appliqué sur le fourreau et la fixation du vérin électromécanique avec son environnement extérieur.

L'invention a été illustrée ici sur la base d'un vérin comprenant des paliers 30, 32 du type à billes à contact oblique. Alternativement, il pourrait être possible de prévoir d'autres types d'éléments roulants, par exemples des rouleaux.

Dans les exemples de réalisation illustrés, les éléments roulants sont disposés en O. Alternativement, il pourrait être possible de prévoir une disposition en X.

L'invention a été illustrée sur la base d'un vérin comprenant des paliers montés axialement en appui l'un contre l'autre et comprenant chacun une unique rangée d'éléments roulants. En variante, il pourrait par exemple être possible de prévoir un unique palier comprenant au moins deux rangées d'éléments roulants, ou encore un nombre supérieur de paliers empilés axialement et comprenant chacun une ou plusieurs rangées d'éléments roulants.

## Revendications

1. Vérin électromécanique comprenant un carter (12), une tige d'actionnement (14) montée mobile longitudinalement par rapport au carter, un moteur électrique (16) pourvu d'un arbre de rotor (26) rotatif, un mécanisme (18) de transformation d'un mouvement de rotation de l'arbre de rotor du moteur électrique en un mouvement de translation linéaire de la tige d'actionnement, et au moins un palier (30) pour guider en rotation l'arbre de rotor (26) du moteur électrique par rapport au carter (12) et pour supporter l'arbre de rotor, dans lequel le vérin comprend en outre un fourreau (36) fixé au carter (12) et à l'intérieur duquel est monté ledit palier (30), et au moins un capteur d'effort (38) monté sur le fourreau (36) en étant décalé axialement par rapport audit palier (30),
**caractérisé en ce que**
le carter (12) comprend un corps principal (12a) tubulaire et des flasques avant (12b) et arrière (12c) montés chacun à une extrémité du corps principal, la tige d'actionnement (14) s'étendant à travers le flasque avant (12b) et ledit palier (30) étant situé axialement entre le moteur électrique (16) et le flasque avant (12b), dans lequel le fourreau (36) comprend une portion tubulaire (36b) axiale à l'intérieur de laquelle est monté ledit palier (30) et supportant ledit capteur d'effort (38) et une bride (36c) radiale pour la fixation dudit fourreau au carter (12) dans lequel la bride (36c) du fourreau est enserrée axialement entre le corps principal (12a) et le flasque avant (12b) du carter.

2. Vérin selon la revendication 1, dans lequel un jeu radial (66) annulaire est prévu au moins entre l'alésage du carter (12) et la portion du fourreau sur laquelle sont montés ledit palier (30) et ledit capteur (38).

3. Vérin selon l'une quelconque revendications précédentes, dans lequel un jeu axial (68) annulaire est prévu entre l'alésage du carter (12) et l'extrémité du fourreau (36) située axialement à l'opposé de la bride (36c).

4. Vérin selon l'une quelconque des revendications précédentes, dans lequel des ouvertures (54) traversantes sont ménagées dans l'épaisseur radiale du fourreau (36), ledit capteur d'effort (38) étant disposé entre deux ouvertures (54) successives dans le sens circonférentiel.

5. Vérin selon l'une quelconque des revendications précédentes, comprenant au moins un câble de connexion électrique qui est relié audit capteur d'effort (38) et qui est monté sur le fourreau (36).

6. Vérin selon la revendication 5, dans lequel ledit câble de connexion électrique s'étend au moins en partie à l'intérieur d'au moins une gorge (56, 58) formée sur le fourreau.

7. Vérin selon la revendication 5 ou 6, comprenant en outre une carte électronique (60) reliée audit câble de connexion électrique et qui est montée à l'intérieur d'un boitier (62) externe fixé au carter (12).

8. Vérin selon l'une quelconque des revendications précédentes, dans lequel le mécanisme (18) de transformation de mouvement comprend une vis (40) solidaire de la tige d'actionnement (14) et pourvue d'un filetage extérieur, et une pluralité de rouleaux (42) longitudinaux en prise avec le filetage extérieur de la vis et avec un filetage intérieur de l'arbre de rotor (26) du moteur électrique.

## Patentansprüche

1. Elektromechanisches Stellglied umfassend ein Gehäuse (12), einen Betätigungsstift (14), der im Verhältnis zum Gehäuse in Längsrichtung beweglich gelagert ist, einen Elektromotor (16), der mit einer drehbaren Rotorwelle (26) versehen ist, einen Mechanismus (18) zur Umwandlung einer Drehbewegung der Rotorwelle des Elektromotors in eine lineare Translationsbewegung des Betätigungsstifts, und wenigstens ein Lager (30), um die Rotorwelle (26) des Elektromotors im Verhältnis zum Gehäuse (12) in der Drehung zu führen und die Rotorwelle zu tragen, wobei das Stellglied ferner eine Hülse (36), die am Gehäuse (12) befestigt ist und in deren Innerem das Lager (30) angebracht ist, und wenigstens einen Kraftsensor (38) umfasst, der auf der Hülse (36) angebracht ist, wobei er im Verhältnis zum Lager (30) axial versetzt ist,
**dadurch gekennzeichnet, dass** das Gehäuse (12) einen rohrförmigen Hauptkörper (12a) und einen vorderen (12b) und hinteren Flansch (12c) umfasst, die jeweils an einem Ende des Hauptkörpers angebracht sind, wobei sich der Betätigungsstift (14) durch den vorderen Flansch (12b) erstreckt und sich das Lager (30) axial zwischen dem Elektromotor (16) und dem vorderen Flansch (12b) befindet, wobei die Hülse (36) einen axialen rohrförmigen Abschnitt (36b), in dessen Innerem das Lager (30) angebracht ist und der den Kraftsensor (38) trägt, und einen Radialflansch (36c) zur Befestigung der Hülse am Gehäuse (12) umfasst, wobei der Flansch (36c) der Hülse axial zwischen dem Hauptkörper (12a) und dem vorderen Flansch (12b) des Gehäuses eingeklemmt ist.

2. Stellglied nach Anspruch 1, wobei ein ringförmiges Radialspiel (66) wenigstens zwischen der Bohrung des Gehäuses (12) und dem Abschnitt der Hülse vorgesehen ist, auf dem das Lager (30) und der Sensor (38) angebracht sind.

3. Stellglied nach einem der vorhergehenden Ansprüche, wobei ein ringförmige Axialspiel (68) zwischen der Bohrung des Gehäuses (12) und dem Ende der Hülse (36) vorgesehen ist, das sich axial gegenüber dem Flansch (36c) befindet.

4. Stellglied nach einem der vorhergehenden Ansprüche, wobei durchgehende Öffnungen (54) in der radialen Dicke der Hülse (36) angeordnet sind, wobei der Kraftsensor (38) zwischen zwei Öffnungen (54) vorgesehen ist, die in Umfangsrichtung aufeinander folgen.

5. Stellglied nach einem der vorhergehenden Ansprüche, umfassend wenigstens ein elektrisches Verbindungskabel, das an den Kraftsensor (38) angeschlossen ist und an der Hülse (36) angebracht ist.

6. Stellglied nach Anspruch 5, wobei sich das elektrische Verbindungskabel wenigstens teilweise innerhalb wenigstens einer Rille (56, 58) erstreckt, die auf der Hülse ausgebildet ist.

7. Stellglied nach Anspruch 5 oder 6, ferner umfassend eine Platine (60), die mit dem elektrischen Verbindungskabel verbunden ist und die im Inneren eines externen Gehäuses (62) angebracht ist, das am Gehäuse (12) befestigt ist.

8. Stellglied nach einem der vorhergehenden Ansprüche, wobei der Mechanismus (18) zur Umwandlung von Bewegung eine Schraube (40), die mit dem Betätigungsstift (14) fest verbunden und mit einem Außengewinde versehen ist, und eine Mehrzahl von Rollen (42) in Längsrichtung umfasst, die mit dem Außengewinde der Schraube und mit einem Innengewinde der Rotorwelle (26) des Elektromotors in Eingriff stehen.

## Claims

1. Electromechanical cylinder comprising a casing (12), an actuating rod (14) mounted so as to be able to move longitudinally relative to the casing, an electric motor (16) provided with a rotating rotor shaft (26), a mechanism (18) for transforming a rotational movement of the rotor shaft of the electric motor into a linear translational movement of the actuating rod, and at least one bearing (30) for guiding the rotor shaft (26) of the electric motor in rotation relative to the casing (12) and for supporting the rotor shaft, wherein the cylinder also comprises a sleeve (36) that is fastened to the casing (12) and inside which is mounted said bearing (30), and at least one load sensor (38) that is mounted on the sleeve (36) while being offset axially relative to said bearing (30),
**characterized in that**
the casing (12) comprises a tubular main body (12a) and a front endplate (12b) and a rear endplate (12c) that are each mounted at one end of the main body, the actuating rod (14) extending through the front endplate (12b) and said bearing (30) being situated axially between the electric motor (16) and the front endplate (12b), wherein the sleeve (36) comprises an axial tubular portion (36b) inside which is mounted said bearing (30) and that supports said load sensor (38), and a radial flange (36c) for fastening said sleeve to the casing (12) wherein the flange (36c) of the sleeve is gripped axially between the main body (12a) and the front endplate (12b) of the casing.

2. Cylinder according to Claim 1, wherein an annular radial clearance (66) is provided at least between the bore of the casing (12) and the portion of the sleeve on which are mounted said bearing (30) and said sensor (38).

3. Cylinder according to either one of the preceding claims, wherein an annular axial clearance (68) is provided between the bore of the casing (12) and the axially opposite end of the sleeve (36) from the flange (36c) .

4. Cylinder according to any one of the preceding claims, wherein through-openings (54) are made in the radial thickness of the sleeve (36), said load sensor (38) being disposed between two openings (54) that succeed one another in the circumferential direction.

5. Cylinder according to any one of the preceding claims, comprising at least one electrical connection cable that is connected to said load sensor (38) and mounted on the sleeve (36).

6. Cylinder according to Claim 5, wherein said electrical connection cable extends at least partially inside at least one groove (56, 58) formed on the sleeve.

7. Cylinder according to Claim 5 or 6, further comprising an electronic card (60) that is connected to said electrical connection cable and mounted inside an external housing (62) fastened to the casing (12).

8. Cylinder according to any one of the preceding claims, wherein the movement transformation mechanism (18) comprises a screw (40) that is secured to the actuation rod (14) and provided with an external thread, and a plurality of longitudinal rollers (42) that engage with the external thread of the screw and with an internal thread of the rotor shaft (26) of the electric motor.
